# EUROPÄISCHE PATENTANMELDUNG

(11) **EP 2 705 919 A2**
(43) Veröffentlichungstag der Anmeldung: **12.03.2014**
(21) Anmeldenummer: 13003411.9
(22) Anmeldetag: 05.07.2013
(51) Int. Cl.: B23F 23/04, B23F 17/00, B23F 19/10

(54) **Verfahren zur Bearbeitung von Werkstücken zur Herstellung von Verzahnungen durch Verzahnfräsen oder Verzahnstoßen**

(30) Priorität: 07.09.2012 DE 102012017744
(71) Anmelder: LIEBHERR-VERZAHNTECHNIK GmbH, 87437 Kempten (DE)
(72) Erfinder: Geiser, Hansjörg, 87487 Wiggensbach (DE); Göbel, Felix, 87439 Kempten (DE)
(74) Vertreter: Laufhütte, Dieter

(57) **Zusammenfassung**

Die Erfindung zeigt ein Verfahren zur Bearbeitung von Werkstücken zur Herstellung von Verzahnungen durch Verzahnfräsen oder Verzahnstoßen, wobei die Werkstücke an einer Hauptbearbeitungsstation verzahnt und an einer Beladestation be- bzw. entladen und/oder an einer Nebenbearbeitungsstation nebenbearbeitet, insbesondere angefast und/oder entgratet werden, wobei die Werkstücke hierfür an mindestens zwei Werkstückspindeln aufgenommen und jeweils durch Verschwenken der Werkstückspindeln in eine erste und mindestens eine zweite Schwenkposition gefahren werden, wobei die Verschwenkung der beiden Werkstückspindeln unabhängig voneinander erfolgt.

## Beschreibung

Die vorliegend Erfindung betrifft ein Verfahren zur Bearbeitung von Werkstücken zur Herstellung von Verzahnungen durch Verzahnfräsen oder Verzahnstoßen, sowie eine entsprechende Fräs- bzw. Stoßmaschine.

Bekannte Fräs- oder Stoßmaschinen haben dabei üblicherweise zumindest eine Hauptbearbeitungsstation, an welcher der eigentliche Verzahnprozess, d. h. das Verzahnfräsen oder das Verzahnstoßen durchgeführt wird. Allerdings entstehen beim Verzahnfräsen oder Verzahnstoßen durch den hohen Materialabtrag und die damit einhergehenden hohen Kräfte Grate am Werkstück, welche in einem Nebenbearbeitungsschritt entfernt werden müssen.

Dabei ist aus der DE 10 2006 044 738 B3 bekannt, zwei Werkstückspindeln an einem um eine Hauptachse verschwenkbaren Drehhalter anzuordnen, so dass die beiden Werkstückspindeln jeweils durch Drehen des Drehhalters um 180° von einer Bearbeitungsposition, an welcher der Fräsprozess durchgeführt wird, zu einer Transferposition verfahren werden können. An der Transferposition erfolgt dabei zum einen das Be- bzw. Entladen der Werkstückspindeln, und zum anderen die Entgratung und Anfasung der bereits vorgefrästen Werkstücke.

Durch diesen Aufbau kann beispielsweise in der Hauptbearbeitungsstation gefräst werden, während an der Transferposition ein anderes Werkstück nebenbearbeitet oder be- bzw. entladen wird. Hierdurch ergibt sich eine Verbesserung der Prozesszeiten.

Aufgabe der vorliegenden Erfindung ist es, ein Verfahren bzw. eine Maschine zur Verfügung zu stellen, welche eine erhöhte Flexibilität bei der Bearbeitung der Werkstücke und/oder verkürzte Prozesszeiten ermöglichen.

Erfindungsgemäß wird diese Aufgabe durch ein Verfahren gemäß Anspruch 1 sowie eine Fräs- oder Stoßmaschine gemäß Anspruch 10 gelöst.

Vorteilhafte Ausgestaltungen der vorliegenden Erfindung sind Gegenstand der Unteransprüche.

Die vorliegende Erfindung zeigt ein Verfahren zur Bearbeitung von Werkstücken zur Herstellung von Verzahnungen durch Verzahnfräsen oder Verzahnstoßen, wobei die Werkstücke an einer Hauptbearbeitungsstation verzahnt und einer Beladestation be- bzw. entladen und/oder an einer Nebenbearbeitungsstation nebenbearbeitet werden, wobei die Werkstücke hierfür an mindestens zwei Werkstückspindeln aufgenommen und jeweils durch Verschwenken der Werkstückspindeln in eine erste und mindestens eine zweite Schwenkposition gefahren werden. Erfindungsgemäß ist dabei vorgesehen, dass die Verschwenkung der beiden Werkstückspindeln unabhängig voneinander erfolgt.

Die erfindungsgemäß vorgesehene unabhängige Verschwenkbarkeit der Werkstückspindeln ermöglicht eine erhebliche Flexibilisierung des Arbeitsablaufes, und erlaubt zudem eine nochmalige Verkürzung der Prozesszeiten.

Bevorzugt wird dabei erfindungsgemäß als Fräsverfahren das Wälzfräsen eingesetzt, bzw. als Stoßverfahren das Wälzstoßen.

Die vorliegende Erfindung betrifft dabei sowohl Verfahren, bei welchen die Werkstücke lediglich von einer Beladestation zu einer Hauptbearbeitungsstation und zurück verfahren werden, als auch Verfahren, bei welchen die Werkstücke lediglich von einer Nebenbearbeitungsstation zu einer Hauptbearbeitungsstation und zurück verfahren werden. Weiterhin betrifft die vorliegende Erfindung Verfahren, bei welchen die Beladestation und die Nebenbearbeitungsstation zu einer einzigen Station zusammengefasst sind, so dass die Werkstückspindeln beispielsweise in der zweiten Schwenkposition sowohl mit der Beladestation als auch mit der Nebenbearbeitungsstation zusammenwirken können.

Besonders bevorzugt erfolgt die Hauptbearbeitung, die Nebenbearbeitung und das Be- bzw. Entladen jedoch an getrennten Stationen, wofür die Werkstückspindeln in eine erste, zweite und dritte Schwenkposition gefahren werden. Hierdurch können die beiden unabhängig voneinander verfahrbaren Werkstückspindeln ihre volle Flexibilität ausspielen. Insbesondere erlauben die beiden unabhängig voneinander verschwenkbaren Werkstückspindeln dabei eine hohe Flexibilität im Hinblick auf die Anordnung der einzelnen Stationen und damit auf die Schwenkpositionen.

Besonders bevorzugt handelt es sich bei dem Verfahren zur Bearbeitung von Werkstücken dabei um ein mehrstufiges Verfahren, bei welchem die Werkstücke sowohl an der Hauptbearbeitungsstation verzahnt als auch an der Nebenbearbeitungsstation nebenbearbeitet werden.

Die vorliegende Erfindung kommt dabei insbesondere bei solchen Verfahren zum Einsatz, bei welchen die Werkstücke an der Nebenbearbeitungsstation angefast und/oder entgratet werden. Ein solches Anfasen und/oder Entgraten ist beim Verzahnfräsen oder Verzahnstoßen oftmals nötig, um die notwendige Verzahnungsqualität zu erreichen. Die vorliegende Erfindung erlaubt dabei eine besonders flexible Ausgestaltung der Prozessabläufe.

Besonders bevorzugt erfolgt dabei die Bearbeitung an der Nebenbearbeitungsstation jeweils zwischen zwei Verzahnschritten an der Hauptbearbeitungsstation. Insbesondere kann dabei ein Vorverzahnungsschritt an der Hauptbearbeitungsstation erfolgen, daraufhin ein Anfas- bzw. ein Entgratschritt an der Nebenbearbeitungsposition und danach wiederum ein Verzahnschritt an der Hauptbearbeitungsstation.

Insbesondere kann es dabei erfindungsgemäß vorkommen, dass während des Bearbeitungsverfahrens das gleiche Werkstück von einer ersten Station zu einer zweiten Station und wieder zurückbewegt wird. Weiterhin vorteilhafterweise wird ein zweites Werkstück gleichzeitig zunächst von einer dritten zur ersten Station und dann von dieser zur zweiten Station transportiert.

Vorteilhafterweise werden erfindungsgemäß die beiden Werkstückspindeln zwischen zwei Bearbeitungsschritten dabei jeweils in der gleichen Schwenkrichtung von einer Schwenkposition zu einer anderen Schwenkposition verschwenkt. Hierdurch kann sichergestellt werden, dass die beiden Werkstückspindeln sich nicht gegenseitig behindern.

Weiterhin kann ein Verschwenkschritt vorgesehen sein, bei welchem eine der beiden Werkstückspindeln beim Verschwenken von einer zu einer anderen Schwenkposition um mehr als 180° verschwenkt wird, während die andere um weniger als 180° verschwenkt wird. Auch dies erlaubt einen störungsfreien Ablauf.

Vorteilhafterweise ist weiterhin erfindungsgemäß vorgesehen, dass die Schwenkrichtung mindestens einer Werkstückspindel bei jedem Verschwenkvorgang wechselt. Besonders bevorzugt wechselt die Schwenkrichtung beider Werkzeugspindeln bei jedem Verschwenkvorgang.

In einer besonders bevorzugten Ausgestaltung des erfindungsgemäßen Verfahrens weisen die Werkstückspindeln jeweils Gegenaufnahmen auf, welche mit den Werkstückspindeln mitverschwenkt werden. Dies hat im Hinblick auf die Genauigkeit der Einspannung der Werkstücke erhebliche Vorteile, da die Achsen während der Montage genau fluchtend zueinander ausgerichtet werden. Hierdurch können Taumelfehler beim Werkstück vermieden werden.

Insbesondere können dabei Werkstückspindel und Gegenaufnahme an einem verschwenkbaren Maschinentisch angeordnet sein, so dass das synchrone Verschwenken der Werkstückspindel und der Gegenaufnahme einfach durch Verschwenken des Maschinentisches erfolgen kann.

Insbesondere kann das vorliegende Verfahren dabei zur Bearbeitung von wellenförmigen Werkstücken eingesetzt werden.

Weiterhin können bei dem erfindungsgemäßen Verfahren im Hinblick auf ein erstes an der ersten Werkstückspindel angeordnetes Werkstück und ein zweites an der zweiten Werkstückspindel angeordnetes Werkstück jeweils gleichzeitig unterschiedliche Prozessschritte durchgeführt werden. Insbesondere kann dabei die Hauptbearbeitung des ersten Werkstücks und die Nebenbearbeitung des zweiten Werkstückes gleichzeitig durchgeführt werden. Weiterhin kann die Hauptbearbeitung des ersten Werkstückes und das Be- oder Entladen eines zweiten Werkstückes gleichzeitig durchgeführt werden. Ebenso ist es möglich, die Nebenbearbeitung eines ersten Werkstückes und das Be- bzw. Entladen eines zweiten Werkstückes gleichzeitig durchzuführen. Dabei kann es sich bei dem Hauptbearbeitungsschritt insbesondere um ein Grobfräsen oder ein Feinfräsen bzw. ein Grobstoßen oder Feinstoßen handeln.

Weiterhin kann erfindungsgemäß vorgesehen sein, dass eine der Werkstückspindeln bereits verschwenkt wird, während die andere Werkstückspindel noch in einer festen Verschwenkposition verbleibt. Insbesondere kann hier eines der Werkstücke bereits teilweise zu der nächsten Verschwenkposition gefahren werden, während das andere Werkstück noch bearbeitet und/oder Be- oder Entladen wird. Hierdurch lassen sich die Prozesszeiten noch einmal verbessern.

Bevorzugt wird das Werkstück gemäß dem erfindungsgemäßen Verfahren in einem ersten Bearbeitungsschritt an der Hauptbearbeitungsstation vorverzahnt, d. h. beim Fräsen durch Vorfräsen am Werkstück eine Verzahnung eingefräst bzw. beim Verzahnstoßen durch das Stoßwerkzeug am Werkstück Zähne erstellt. Hierdurch entstehen Grate, welche dann erfindungsgemäß bevorzugt an der Nebenbearbeitungsstation entfernt werden.

Erfindungsgemäß kann die Nebenbearbeitung in einer ersten erfindungsgemäßen Variante durch ein Anfas-Fräs-Entgraten erfolgen.

Bei dieser Nebenbearbeitung werden die Fasen mittels Frässtiften erzeugt, welche mittels Vorspannung am Werkstück anliegen. Die Fase wird dabei durch Abwälzen an der Kontur erzeugt. Bevorzugt wird dabei mit einer fixen Werkzeugeinstellung gearbeitet, d. h. mit fixem Anstellwinkel und Mittenausrichtung, wodurch sich eine variable Fase ergibt.

Alternativ kann die Nebenbearbeitung auch durch einen Chamfer-Cut-Prozess erfolgen. Hierbei wird eine Frässcheibe oder ein Fräskopf mit der oberen bzw. unteren Zahnradkante in Eingriff gebracht und auf dieser abgewälzt, um eine Fase zu erzeugen.

Weiterhin kann das Anfasen bzw. Entgraten auch durch eine Drückentgratung erfolgen. Dabei wird ein flaches Anfaswerkzeug mit großer Kraft an die Kanten des Werkstückes gepresst, so dass sich diese plastisch verformen. Das Material wird dabei von den Kanten weg nach außen gedrückt, so dass in axialer und radialer Richtung überstehende Materialwulste verbleiben.

Die axialen Materialwulste können dabei durch Schneiden beseitigt werden. Dieses Schneiden wird auch als Sekundärentgraten bezeichnet und wird bevorzugt an der Nebenbearbeitungsstation durchgeführt.

Die noch verbleibenden Grat- oder Materialwulste werden bevorzugt durch einen Feinfräs- bzw. einen Feinstoßschritt beseitigt, welchen an der Hauptbearbeitungsstation erfolgt. Dabei wird vom Werkstück noch einmal etwas Material abgenommen, was jedoch aufgrund der geringen Materialmenge und folglich geringer Materialbeanspruchung nicht zu Graten führt, welche nochmals in einem eigenen Prozess entfernt werden müssen. Insbesondere sind die Grate so klein, dass sie häufig abfallen bzw. anschließend ohnehin zerstört werden. Außerdem liegen sie innerhalb der zuvor angefasten Fläche und sind so im Nachfolgeprozess nicht nachteilig.

Besonders bevorzugt nehmen bei den erfindungsgemäßen Verfahren die Schwenkpositionen zumindest teilweise einen Winkel von weniger als 180° zueinander ein. Insbesondere können so mehr als zwei Schwenkpositionen vorgesehen sein, welche sich um einen Kreisumfang herum verteilen.

Besonders bevorzugt werden die beiden Werkstückspindeln dabei um kolineare Schwenkachsen verschwenkt. Hierdurch können die einzelnen Stationen in gleicher Weise durch die Werkstückspindeln erreicht werden.

Weiterhin kann erfindungsgemäß eine weitere Nebenbearbeitungsstation vorgesehen sein, an welche die Werkstückspindeln demgemäß in einer dritten oder vierten Schwenkposition herangefahren werden. Insbesondere können dabei zwei Nebenbearbeitungsstationen vorgesehen sein, an welchen unterschiedliche Schritte der oben näher beschriebenen Nebenbearbeitung durchgeführt werden.

Das erfindungsgemäße Verfahren wird bevorzugt auf einer Fräs- oder Stoßmaschine durchgeführt, wie sie im Folgenden näher beschrieben wird. Die vorliegende Erfindung stellt eine solche Fräs- oder Stoßmaschine jedoch auch unabhängig von dem erfindungsgemäßen Verfahren unter Schutz.

Die vorliegende Erfindung umfasst eine Fräs- oder Stoßmaschine zur Verzahnbearbeitung von Werkstücken mit mindestens zwei verschwenkbar angeordneten Werkstückspindeln zur Aufnahme von Werkstücken und mit einer Hauptbearbeitungsstation zum Fräs- oder Stoßbearbeiten der Werkstücke. Weiterhin umfasst die Fräs- oder Stoßmaschine eine Beladestation zum Beladen der Werkstückspindeln und/oder eine Nebenbearbeitungsstation zum Nebenbearbeiten der in den Werkstückspindeln aufgenommenen Werkstücke. Dabei sind die beiden Werkstückspindeln so an der Maschine angeordnet, dass sie in eine erste und mindestens eine zweite Schwenkposition verschwenkbar sind, um mit den einzelnen Stationen der Fräs- oder Stoßmaschine zusammenwirken zu können. Erfindungsgemäß sind dabei die beiden Werkstückspindeln unabhängig voneinander verschwenkbar.

Durch die erfindungsgemäße Fräs- oder Stoßmaschine ergeben sich die gleichen Vorteile, welche bereits oben im Hinblick auf das erfindungsgemäße Verfahren näher dargestellt wurden. Insbesondere erlaubt die unabhängige Verschwenkbarkeit der Werkstückspindeln eine erhöhte Flexibilität beim Einsatz der Fräs- oder Stoßmaschine sowie die Verringerung von Bearbeitungszeiten.

Erfindungsgemäß kann die Fräs- oder Stoßmaschine nur die Hauptbearbeitungsstation und die Beladestation aufweisen, und damit ohne Nebenbearbeitungsstation ausgeführt sein. Die unabhängige Verschwenkbarkeit erlaubt damit ein unabhängiges Verschwenken zwischen Beladestation und Hauptbearbeitungsstation.

Erfindungsgemäß kann die Fräs- oder Stoßmaschine auch nur die Hauptbearbeitungsstation und die Nebenbearbeitungsstation aufweisen, und damit ohne eine Beladestation ausgeführt sein. Die unabhängige Verschwenkbarkeit erlaubt damit ein unabhängiges Verschwenken zwischen Nebenbearbeitungsstation und Hauptbearbeitungsstation.

Weiterhin können Beladestation und Nebenbearbeitungsstation zu einer Station integriert sein.

Besonders bevorzugt sind jedoch Hauptbearbeitungsstation, Beladestation und Nebenbearbeitungsstation separat ausgeführt, und werden durch das Verfahren der Werkstückspindeln in drei unterschiedliche Schwenkpositionen erreicht.

Erfindungsgemäß können die beiden Schwenkachsen parallel und/oder vertikal ausgerichtet sein.

Besonders bevorzugt sind die Schwenkachsen der beiden Werkstückspindeln erfindungsgemäß kolinear zueinander angeordnet. Insbesondere können die Werkstückspindeln dabei jeweils an einem Maschinentisch angeordnet sein, wobei die beiden Maschinentische um kolineare Schwenkachsen verschwenkbar sind.

Insbesondere können die Werkstückspindeln dabei so an den Maschinentischen angeordnet sein, dass diese - gegebenenfalls in axialer Richtung versetzt - den gleichen Schwenkkreis aufweisen.

Insbesondere kann eine säulenartige Führung für die beiden Maschinentische vorgesehen sein, welche in Richtung der Schwenkachsen geteilt ausgebildet ist, so dass ein erster, beispielsweise oberer Teil den einen Maschinentisch mit der ersten Werkstückspindel und ein anderer, beispielsweise unterer Teil den anderen Maschinentisch mit der zweiten Werkstückspindel verschwenkt.

Besonders bevorzugt sind erfindungsgemäß die Beladestation und die Nebenbearbeitungsstation separat ausgeführt, wobei die beiden Werkstückspindeln durch Verschwenken in eine erste, zweite und dritte Schwenkposition an die jeweiligen Stationen herangefahren werden. Durch die Verwendung dreier separater Stationen für die Hauptbearbeitung, die Nebenbearbeitung und das Be- bzw. Entladen werden die Prozesszeiten nochmals reduziert.

In einer besonders bevorzugten Ausgestaltung der erfindungsgemäßen Verzahnmaschine weisen die Werkstückspindeln Gegenaufnahmen auf, welche mit den Werkstückspindeln mitverschwenkt werden können. Vorteilhafterweise erfolgt das Verschwenken dabei durch ein Verschwenken des Maschinentisches, an welchem Werkstückspindel und Gegenaufnahme angeordnet sind. Insbesondere kann die Gegenaufnahme dabei eine Gegenhalteraufnahme bzw. Gegenhalterspitze umfassen. Bevorzugt ist die Gegenaufnahme in axialer Richtung verfahrbar am Maschinentisch angeordnet.

Bevorzugt ist mindestens eine der Werkstückspindeln bei der erfindungsgemäßen Verzahnmaschine um mehr als 180° verschwenkbar. Hierdurch ergibt sich eine hohe Flexibilität bei der Anordnung der einzelnen Stationen sowie bei den Bearbeitungsprozessen, welche auf der erfindungsgemäßen Verzahnmaschine möglich sind. Besonders bevorzugt ist mindestens eine der Werkstückspindeln dabei um mehr als 230° verschwenkbar.

Weiterhin sind die Stationen vorteilhafterweise so angeordnet, dass die Schwenkpositionen zumindest teilweise einen Winkel von weniger als 180° zueinander einnehmen. Beispielsweise können dabei zwei Schwenkpositionen vorgesehen sein, welche 180° zueinander einnehmen, und eine dritte Schwenkposition, welche zwischen den beiden Schwenkpositionen angeordnet ist. Weiterhin ist auch eine Anordnung denkbar, bei welcher alle drei Schwenkpositionen jeweils in aufeinanderfolgenden Winkeln von weniger als 180° angeordnet sind, beispielsweise jeweils in Winkeln von 120°.

Weiterhin kann auch eine weitere Nebenbearbeitungsstation vorgesehen sein, an welche die Werkstückspindeln in einer dritten oder vierten Schwenkposition herangefahren werden. Insbesondere können dabei zwei separate Nebenbearbeitungsstationen vorgesehen sein.

Die erfindungsgemäße Verzahnmaschine weist weiterhin vorteilhafterweise eine Steuerung auf, welche Funktionen zur Durchführung des oben beschriebenen Verfahrens aufweist. Beispielsweise kann die Verzahnmaschine dabei eine Bedienoberfläche aufweisen, durch welche entsprechende Funktionen anwählbar sind. Besonders bevorzugt führen die erfindungsgemäßen Funktionen dabei die erfindungsgemäßen Verfahren automatisch durch.

Ausführungsbeispiele der vorliegenden Erfindung werden nun anhand von Zeichnungen näher beschrieben.

Dabei zeigen:
- Figur 1:: eine Verzahnmaschine nach dem Stand der Technik,
- Figur 2:: ein erstes Ausführungsbeispiel einer Verzahnfräsmaschine gemäß der vorliegenden Erfindung,
- Figur 3a:: ein zweites Ausführungsbeispiel einer erfindungsgemäßen Verzahnungsfräsmaschine mit einer Drückentgrateinrichtung, wobei sich die Maschinentische in einer Belade- und einer Hauptbearbeitungsposition befinden,
- Figur 3b:: das in Figur 3a gezeigte zweite Ausführungsbeispiel einer erfindungsgemäßen Verzahnungsfräsmaschine, wobei sich die Maschinentische in einer Belade- und einer Nebenbearbeitungsposition befinden,
- Figur 4a:: ein drittes Ausführungsbeispiel einer Verzahnungsfräsmaschine mit einer Chamfer-Cut-Entgrateinrichtung, wobei sich die Maschinentische in einer Hauptbearbeitungs- und in einer Nebenbearbeitungsposition befinden,
- Figur 4b:: das in Figur 4a gezeigte dritte Ausführungsbeispiel einer erfindungsgemäßen Verzahnungsfräsmaschine, wobei sich die Maschinentische in einer Hauptbearbeitungs- und einer Beladeposition befinden,
- Figur 5:: ein Ausführungsbeispiel einer Verzahnungsstoßmaschine mit einer Chamfer-Cut-Entgrateinrichtung, wobei sich die Maschinentische in einer Hauptbearbeitungs- und in einer Beladeposition befinden,
- Figur 6:: ein Ausführungsbeispiel eines erfindungsgemäßen Prozessablaufs, bei welchem Belade- und Hauptbearbeitungsposition einen Winkel von 180° einnehmen, und die Nebenbearbeitungsposition einen Winkel von jeweils 90° zu den beiden anderen Positionen einnimmt, und
- Figur 7:: ein weiteres Ausführungsbeispiel eines Prozessablaufes gemäß der vorliegenden Erfindung, wobei die drei Schwenkpositionen jeweils Winkel von 120° zueinander einschließen.

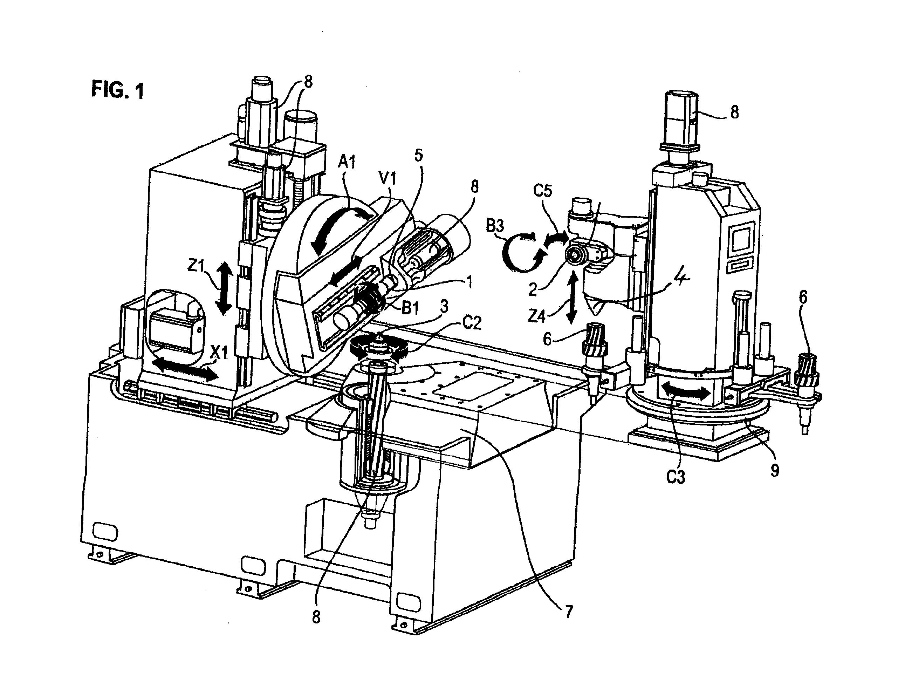

Figur 1 zeigt ein Ausführungsbeispiel einer Verzahnfräsmaschine gemäß dem Stand der Technik. Dabei ist ein Fräskopf 1 an einer Werkzeugspindel 5 angeordnet und über einen Antrieb 8 um die B1-Achse antreibbar. Weiterhin ist eine Werkstückspindel 3 vorgesehen, an welcher ein Werkstück aufgenommen und über den Antrieb 8 um die C2-Achse gedreht werden kann. Der Fräskopf 1 ist dabei über die üblichen Bewegungsachsen relativ zum Werkstück bewegbar. Insbesondere kann der Fräskopf über die X1-Achse an das Werkstück angestellt werden und über die Z1-Achse in Breitenrichtung des Werkstückes bewegt werden.

Die Werkstückspindel 3 ist fest am Maschinentisch 7 angeordnet. Die Werkstücke 6 werden dabei über eine Beladestation 9 von einem Band aufgenommen und auf die Werkstückspindel 3 aufgesetzt, wobei sie durch ein Heranfahren der Gegenaufnahme 4 fixiert werden.

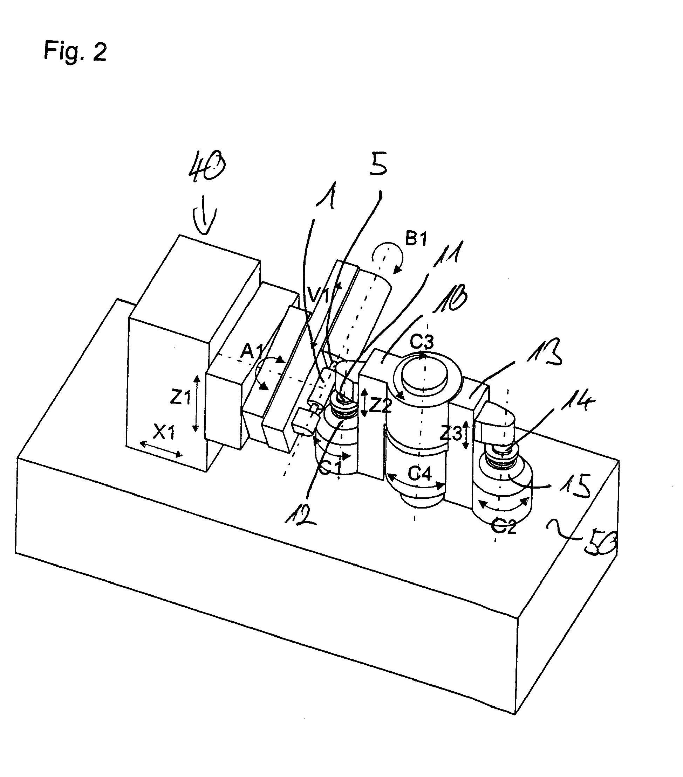

Ein erstes Ausführungsbeispiel der vorliegenden Erfindung ist nun in Figur 2 dargestellt. Dabei sind zwei Werkstückspindeln 12 bzw. 15 vorgesehen, welche jeweils separat um die Schwenkachsen C3 bzw. C4 verschwenkbar sind. In der Werkstückspindel 12 ist dabei das Werkstück 11 aufgenommen, und kann über einen Antrieb um die Drehachse C1 gedreht werden. An der Werkstückspindel 15 ist das Werkstück 14 aufgenommen, und kann ebenfalls über einen Antrieb um die Drehachse C2 gedreht werden.

Die beiden Werkstückspindeln 12 und 15 sind dabei jeweils an einem Maschinentisch 10 bzw. 13 angeordnet, und können über ein Verschwenken dieser Maschinentische um die Achsen C3 bzw. C4 verschwenkt werden. Dabei sind die beiden Achsen C3 und C4 kolinear angeordnet. Weiterhin weisen die Drehachsen C1 bzw. C2 der beiden Werkzeugspindeln den gleichen Abstand zu der gemeinsamen Schwenkachse der beiden Maschinentische auf. Hierdurch weisen die beiden Werkstückspindeln identische Drehkreise auf.

An den Maschinentischen 10 bzw. 13 sind jeweils Gegenaufnahmen 11 bzw. 14 für die Werkstückspindeln 12 bzw. 15 vorgesehen, welche über die Z2- bzw. Z3-Achse an die Werkstücke herangefahren werden können. Hierdurch werden die Gegenaufnahmen mit den Werkstückspindeln mitverschwenkt.

Die Verwendung der zwei separat verschwenkbaren Werkstückspindeln erlaubt einen erheblich flexibleren Herstellungsprozess.

Bei dem in Figur 2 gezeigten Ausführungsbeispiel ist als Hauptbearbeitungsstation 40 ein Fräskopf dargestellt, welcher dem in Figur 1 gezeigten Ausführungsbeispiel entspricht. Insbesondere wird dabei ein Fräswerkzeug 1 an einer Werkzeugspindel 5 eingespannt und kann um die B1-Achse rotiert werden. Weiterhin erfolgt ein Zustellen über die X1-Achse und ein Bewegen in Breitenrichtung des Werkstücks über die Z1-Achse. Zudem ist ein Verschiften entlang der V1-Achse sowie ein Verschwenken um die A1-Achse möglich.

Die Werkzeugspindel 12 befindet sich dabei in Figur 2 in der Hauptbearbeitungsposition, in welcher das Werkstück 11 durch den Fräskopf 1 bearbeitet wird. Bevorzugt kommt dabei ein Wälzfräsverfahren zum Einsatz, bei welchem die Drehbewegung der B1-Achse sowie der C1-Achse aneinander gekoppelt sind.

Das in Figur 2 gezeigte Ausführungsbeispiel weist dabei an der Be- und Entladeposition weiterhin eine Be- und Entladestation auf, die in Figur 2 nicht näher dargestellt ist. Die Be- und Entladestation kann dabei ähnlich wie in Figur 1 dargestellt ausgeführt sein, und dient dem Aufnehmen von Werkstücken beispielsweise von einem Band sowie dem Anordnen der Werkstücke an der Werkstückspindel 15.

Bei dem in Figur 2 gezeigten Ausführungsbeispiel kann an der einen Werkstückspindel ein Werkstück entnommen bzw. diese mit einem neuen Werkstück beladen werden, während ein an der anderen Werkstückaufnahme angeordnetes anderes Werkstück an der Hauptbearbeitungsvorrichtung 40 bearbeitet wird. Nach Beendigung des Hauptbearbeitungsschrittes kann dann die Position der Werkstückaufnahmen getauscht werden, so dass die beiden Schritte mit neuen Werkstücken wiederholt werden können.

Durch die unabhängige Verschwenkbarkeit der beiden Werkstückaufnahmen kann dabei beispielsweise ein neu auf der Werkstückaufnahme 15 aufgenommenes Werkstück bereits in Richtung auf die Hauptbearbeitungsposition verfahren werden, bevor der Hauptbearbeitungsvorgang für das gerade an der Werkstückaufnahme 12 befindliche Werkstück beendet ist. Sobald der Hauptbearbeitungsvorgang dann beendet ist, ergibt sich ein schnellerer Wechsel an der Hauptbearbeitungsposition. Bereits hierdurch lassen sich die Prozesszeiten verkürzen.

Besonders bevorzugt kommt bei der vorliegenden Erfindung jedoch neben einer Be- und Entladestation sowie einer Hauptbearbeitungsstation noch eine separate Nebenbearbeitungsstation zum Einsatz, wodurch sich die Vorteile der separaten Verschwenkbarkeit der beiden Werkstückspindeln nochmals erhöhen.

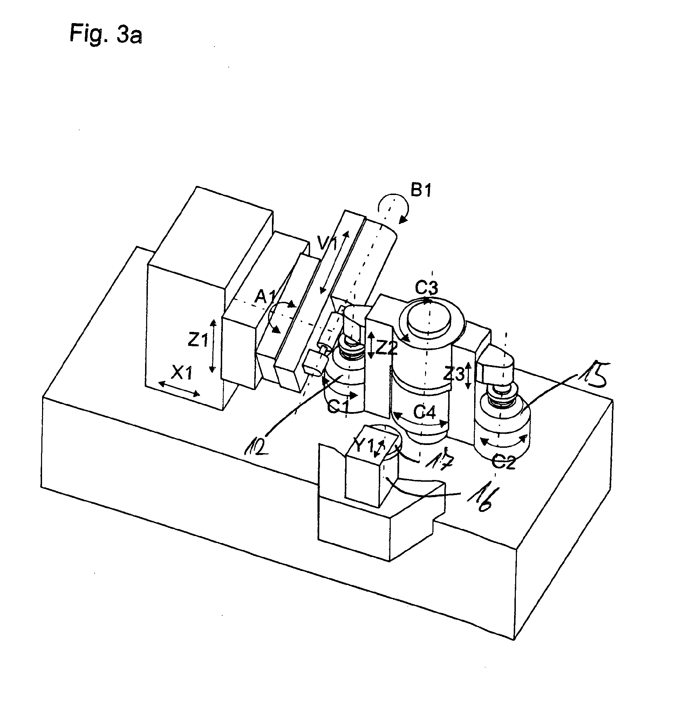

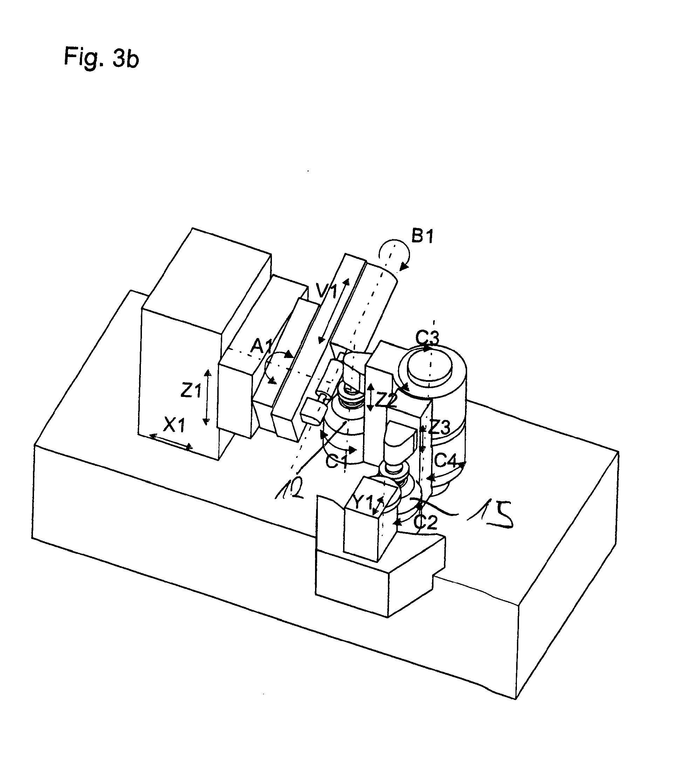

Ein Ausführungsbeispiel einer solchen Fräsmaschine ist dabei in Figuren 3a und b gezeigt, wobei zwischen Be- bzw. Entladestation und Hauptbearbeitungsstation eine Nebenbearbeitungsstation vorgesehen ist.

Figur 3a zeigt dabei die erste Werkzeugspindel 15 in der Be- bzw. Entladeposition und die zweite Werkstückspindel in der Hauptbearbeitungsposition. In der Figur 3b wurde nun die erste Werkstückspindel 15 über die C4-Achse ihres Maschinentisches in die Nebenbearbeitungsposition verschwenkt. Die zweite Werkstückspindel befindet sich dagegen weiterhin in der Hauptbearbeitungsposition.

Die Nebenbearbeitungsstation ist in Fig. 3a/3b als Drückentgratstation 16 ausgeführt. Dabei wird eine Anfasscheibe 17 über die Achse Y1 gegen die Kanten eines in der Nebenbearbeitungsposition befindlichen Werkstücks gepresst, wie dies in Figur 3b gezeigt ist. Neben dem Anfaswerkzeug kann die Drückentgratstation 16 auch ein Schneidwerkzeug aufweisen, um axiale Grate zu entfernen.

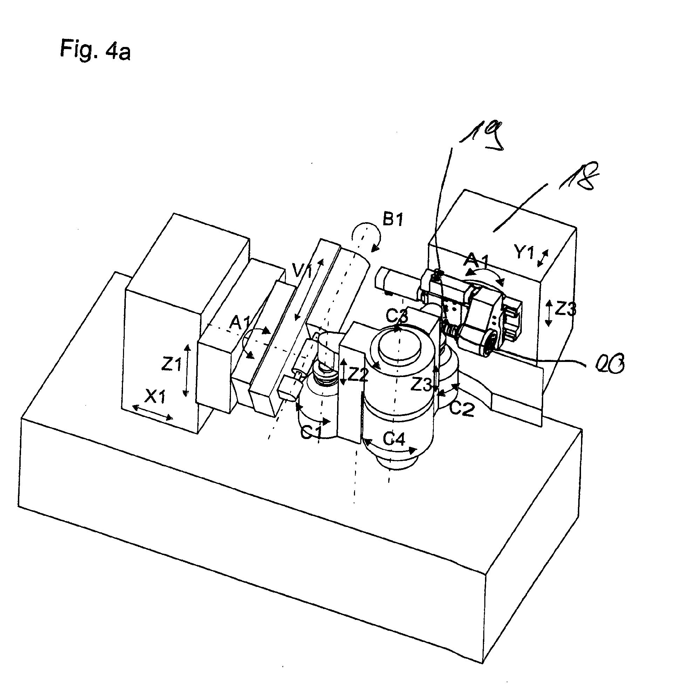

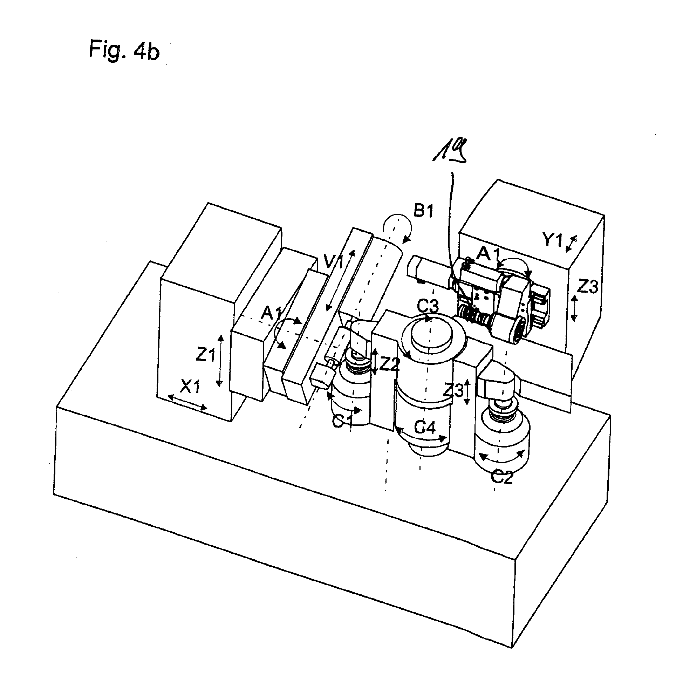

In Figuren 4a und b ist ein alternatives Ausführungsbeispiel gezeigt, bei welchem als Nebenbearbeitungsstation eine Chamfer-Cut-Station 18 zum Einsatz kommt. Die Chamfer-Cut-Station 18 entspricht dabei im Wesentlichen einem Fräskopf, wobei an der Werkzeugaufnahme 20 eine oder zwei Entgratfräser 19 angeordnet sind, welche auf den Kanten des Werkstücks abgewälzt werden, um Fasen zu erzeugen.

Figur 4a zeigt dabei die erste Werkzeugspindel 15 in der Nebenbearbeitungsposition, Figur 4b dagegen in der Be- und Entladeposition.

Weiterhin unterscheiden sich die in Figuren 3 und 4 gezeigten Ausführungsbeispiele dadurch, dass die Nebenbearbeitungsstation in Figur 3 auf der Bedienseite der Maschine angeordnet ist, in Figur 4 dagegen auf der Gegenbedienseite. Selbstverständlich kann jedoch auch jeweils eine Anordnung auf der anderen Seite erfolgen.

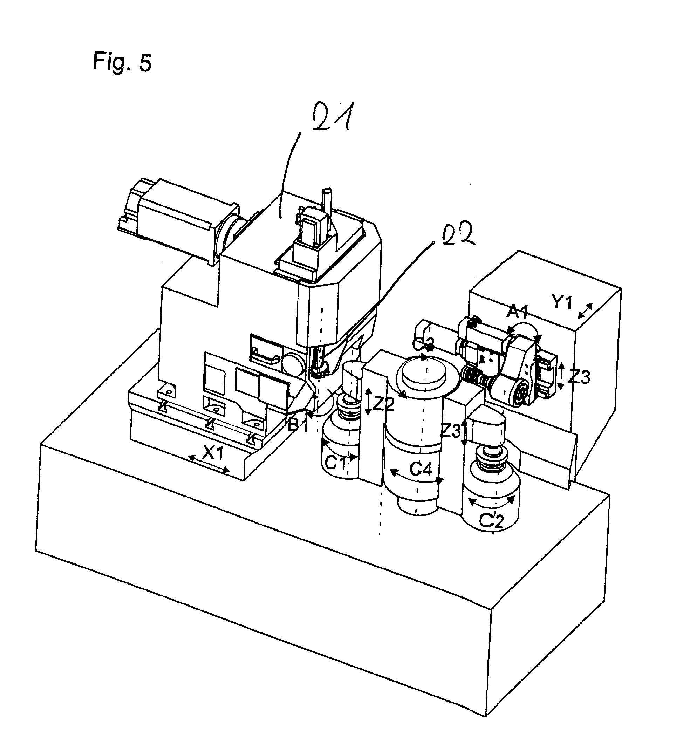

In Figur 5 ist ein weiteres Ausführungsbeispiel der vorliegenden Erfindung gezeigt, bei welchem an Stelle einer Fräsmaschine als Hauptbearbeitungsstation eine Wälzstoßmaschine 21 zum Einsatz kommt. Dabei ist ein Stoßwerkzeug 22 vorgesehen, welches in vertikaler Richtung durch einen Stoßantrieb bewegbar und um die Achse B1 drehbar ist. Die Zustellung erfolgt dabei wiederum in X1-Richtung. Dabei ist wiederum die Drehbewegung des Werkzeuges mit der Drehbewegung des jeweils zu bearbeitenden Werkstückes gekoppelt.

Bei dem in Figur 5 gezeigten Ausführungsbeispiel kommt als Nebenbearbeitungsstation wiederum eine Chamfer-Cut-Entgrateinrichtung zum Einsatz. Alternativ könnte jedoch auch die in Figur 3 gezeigte Drückentgrateinrichtung eingesetzt werden. Weiterhin könnte die Nebenbearbeitungsstation auch hier auf der gegenüberliegenden Seite angeordnet sein. Bei dem in Figur 5 gezeigten Ausführungsbeispiel befindet sich dabei die erste Werkstückspindel in der Be- und Entladeposition, und die zweite Werkstückspindel in der Hauptbearbeitungsposition.

Durch die erfindungsgemäß unabhängig voneinander verfahrbaren zwei Werkstückspindeln ist bei den Ausführungsbeispielen mit separater Be- und Entladestation, Hauptbearbeitungsstation und Nebenbearbeitungsstation ein Be- und Entladen einer Spindel möglich, während an der zweiten Spindel noch ein Hauptbearbeitungsschritt oder ein Nebenbearbeitungsschritt durchgeführt wird. Weiterhin kann auch hier bereits eine teilweise Schwenkbewegung einer der Spindeln stattfinden, während ein an der anderen Spindel angeordnetes Werkstück noch haupt- oder nebenbearbeitet wird. Weiterhin wäre auch noch eine weitere, vierte Station möglich, die beispielsweise in den Figuren 3 bis 5 gezeigten Ausführungsbeispielen gegenüber der ersten Nebenbearbeitungsstation angeordnet ist. Auch hier könnte ein Nebenbearbeitungsschritt durchgeführt werden. Beispielsweise könnte auch ein zusätzlicher Prozess wie z. B. Drehen, Messen oder Positionieren erfolgen.

Durch die unabhängige Schwenkbewegung der beiden Motorspindeln muss die Be-und Entladeposition nicht wie im Stand der Technik genau 180° gegenüber der Hauptbearbeitungsposition versetzt sein. Vielmehr ist man bei der Anordnung von Hauptbearbeitungsposition, Nebenbearbeitungsposition und Be- bzw. Entladeposition nur durch den minimal möglichen Schwenkwinkel zwischen den beiden Werkstückspindeln begrenzt. Beispielsweise könnten daher bei den in Figuren 3 bis 5 gezeigten Ausführungsbeispielen auch die Positionen von Nebenbearbeitungsstation und Be- und Entladestation vertauscht werden. Weiterhin wäre eine Anordnung der drei Stationen auch um jeweils 120° versetzt möglich.

Weiterhin werden gemäß dem bevorzugten Ausführungsbeispiel der vorliegenden Erfindung die Gegenhalterarme der Gegenaufnahmen mit den Werkstückspindeln mitgeschwenkt, da auch diese an den verschwenkbaren Maschinentischen angeordnet sind. Hierdurch können insbesondere auch wellenförmige Werkstücke beladen und bearbeitet werden. Weiterhin ergibt sich im Hinblick auf die Genauigkeit der Vorteil, dass die Achsen während der Montage genau fluchtend zueinander ausgerichtet werden können. Dies verhindert Taumelfehler am Werkstück.

Ein bevorzugter Bearbeitungsprozess, welcher auf Grundlage der vorliegenden Erfindung durchgeführt wird, soll nun im Folgenden beschrieben werden:

Insbesondere wird dabei bei einer bevorzugten Ausgestaltung ein auf einer Werkstückaufnahme angeordnetes Werkstück zunächst in der Hauptbearbeitungsposition durch Vorfräsen bzw. Vorstoßen bearbeitet, so dass ein Halbfertigteil entsteht. Daraufhin wird das Halbfertigteil durch Verschwenken der entsprechenden Werkstückspindel in die Nebenbearbeitungsposition verbracht, wo das Halbfertigteil entgratet und/oder angefast wird. Im Hinblick auf die hierzu eingesetzten Methoden sei dabei auf die vorangegangene Beschreibung verwiesen.

Daraufhin wird das so entgratete bzw. angefaste Werkstück durch Verschwenken der Werkstückspindel wieder in die Hauptbearbeitungsposition verbracht, wo aus dem Halbfertigteil durch Feinfräsen bzw. Feinstoßen ein Fertigteil gefertigt wird.

Das Fertigteil wird dann durch Verschwenken der entsprechenden Werkstückspindel in die Be- bzw. Entladeposition gebracht, wo es entladen wird. Daraufhin wird ein neues Werkstück an der nun leeren Spindel eingelegt und durch ein Verschwenken der Werkstückspindel in die Hauptbearbeitungsposition verbracht, worauf ein neuer Bearbeitungszyklus beginnt.

Durch die beiden Werkstückspindeln ist es nun möglich, zwei Werkstücke gleichzeitig auf der erfindungsgemäßen Maschine zu bearbeiten. Dabei folgt ein zweites, auf der zweiten Werkstückspindel angeordnetes Werkstück in einer bevorzugten Ausgestaltung jeweils um einen Schritt versetzt dem oben beschriebenen Bearbeitungsprozess des ersten Werkstücks.

Zur Koordination der Bewegungen der beiden Werkstückspindeln werden diese dabei bevorzugt jeweils in gleicher Schwenkrichtung von einer Schwenkstellung zur nächsten Schwenkstellung verfahren.

Die Werkstückspindeln sind dabei mit einem solchen Winkel verschwenkbar, dass beide Werkstückaufnahmen jeweils mit allen Stationen zusammenarbeiten können. Der hierzu notwendige Gesamtschwenkwinkel hängt dabei von der Anordnung der jeweiligen Stationen und dem Verfahrensablauf ab.

Bei dem in Figur 3 bis 5 gezeigten Ausführungsbeispiel ist dabei für eine der beiden Maschinentische ein Schwenkwinkel von mindestens 270° notwendig, um sämtliche Stationen zu erreichen, während für den anderen Maschinentisch bei entsprechender Verfahrensführung ein Schwenkwinkel von 180° ausreicht.

Insbesondere kann dabei zumindest der eine Maschinentisch nur über eine Seite des Schwenkkreises von der Be- und Entladestation zur Hauptbearbeitungsstation und zurück verfahrbar sein. Weiterhin kann der andere Maschinentisch nur über die andere Seite des Schwenkkreises zu diesem verfahrbar sein. Bspw. kann dabei der eine Maschinentisch nur im Uhrzeigersinn von der Be- und Entladestation zur Hauptbearbeitungsstation und im Gegenuhrzeigersinn zurück von der Hauptbearbeitungsstation zur Be- und Entladestation verfahrbar sein, während der andere Maschinentisch nur im Gegenuhrzeigersinn von der Be- und Entladestation zur Hauptbearbeitungsstation und im Uhrzeigersinn zurück von der Hauptbearbeitungsstation zur Be- und Entladestation verfahrbar ist.

Weiterhin kann dabei zumindest der eine Maschinentisch nur über eine Seite des Schwenkkreises von der Hauptbearbeitungsstation zur Nebenbearbeitungsstation verfahrbar sein. Weiterhin kann der andere Maschinentisch nur über die andere Seite des Schwenkkreises zu diesem verfahrbar sein.

Bevorzugt können die Schwenkachsen so ausgeführt sein, dass der eine Maschinentisch von Be- und Entladestation über die Nebenbearbeitungsstation zur Hauptbearbeitungsstation und zurück verschwenkbar ist, während der andere Maschinentisch über die gegenüberliegende Seite des Schwenkkreises von der Be- und Entladestation über die Hauptbearbeitungsstation zur Nebenbearbeitungsstation und zurück verschwenkbar ist.

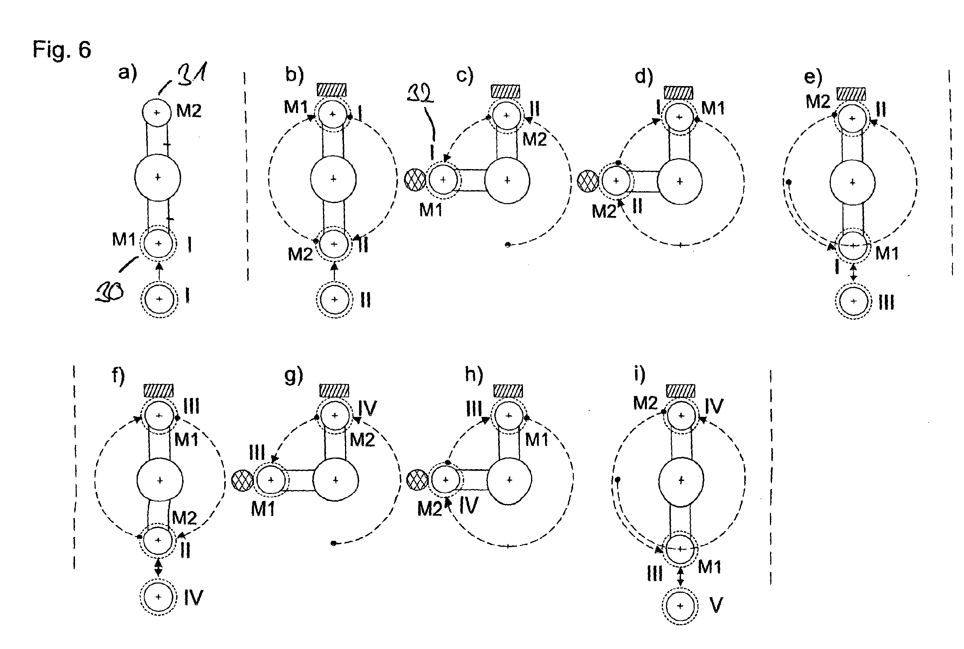

Ein beispielhafter Prozessablauf soll nun anhand von Figur 6 näher dargestellt werden, wobei ein solches Verfahren beispielsweise mit der in Figur 3 dargestellten Maschine durchführbar wäre.

In Figur 6 sind dabei schematisch die beiden Maschinentische M1 und M2 mit den jeweils an diesen angeordneten Werkstückspindeln gezeigt, wobei die Maschinentische eine Be- und Entladeposition 30, eine Hauptbearbeitungsposition 31 und eine Nebenbearbeitungsposition 32 anfahren können.

Dabei sind Be- und Entladeposition 30 und Hauptbearbeitungsposition 31 um 180° versetzt, während die Nebenbearbeitungsposition 32 um 90° versetzt zwischen diesen angeordnet ist.

Dabei ist ein Bearbeitunsprozess gezeigt, bei welchem Werkstücke I bis V nacheinander wie folgt bearbeitet werden:
a) Beladen des ersten Maschinentisches (M1) mit dem Werkstück (I).
b) Verschwenken des ersten Maschinentisches (M1) an die Hauptbearbeitungsposition, während zeitgleich der zweite Maschinentisch (M2) an die Be-und Entladeposition verfahren wird. Daraufhin wird das Werkstück (I) an der Hauptbearbeitungsposition vorgefräst, während gleichzeitig ein zweites Werkstück (II) am zweiten Maschinentisch (M2) eingespannt wird.
c) Nun wird der erste Maschinentisch (M1) an die Nebenbearbeitungsstation verschwenkt, während zeitgleich der zweite Maschinentisch (M2) an die Hauptbearbeitungsposition verschwenkt wird. Nun erfolgt zeitgleich das Vorfräsen des zweiten Werkstücks (II) sowie das Anfasen und/oder Entgraten des ersten Werkstücks (I) an der Nebenbearbeitungsstation.
d) Nun wird der zweite Maschinentisch (M2) in die Nebenbearbeitungsposition verschwenkt, während der erste Maschinentisch (M1) zurück an die Hauptbearbeitungsposition verschwenkt wird. Während das erste Werkstück in der Hauptbearbeitungsposition fertiggefräst wird, wird nun das zweite Werkstück (II) an der Nebenbearbeitungsstation angefast und/oder entgratet.
e) Der erste Maschinentisch (M1) wird nun an die Be- und Entladeposition verschwenkt, während der zweite Maschinentisch (M2) an die Hauptbearbeitungsposition verschwenkt wird. Während nun auch das zweite Werkstück (II) fertig gefräst wird, wird das erste Werkstück (I) gegen ein neues drittes Werkstück (III) ausgetauscht.
f) Nun wird auch der zweite Maschinentisch (M2) an die Be- und Entladeposition verschwenkt, um das zweite Werkstück gegen ein neues, viertes Werkstück (IV) auszutauschen. Gleichzeitig wird der erste Maschinentisch (M1) mit dem Werkstück (III) in die Hauptbearbeitungsposition verfahren, um dort vorgefräst zu werden. Die zuvor beschriebenen Schritte werden dann mit den neuen Werkstücken (III; IV) wiederholt. Hierdurch ergibt sich ein kontinuierlicher Verfahrensablauf, bei welchem nacheinander Werkstück für Werkstück bearbeitet wird.

Bei dem in Figur 6 gezeigten Arbeitsablauf ist dabei der erste Maschinentisch M1 um 180° verschwenkbar und der zweite Maschinentisch um 270°.

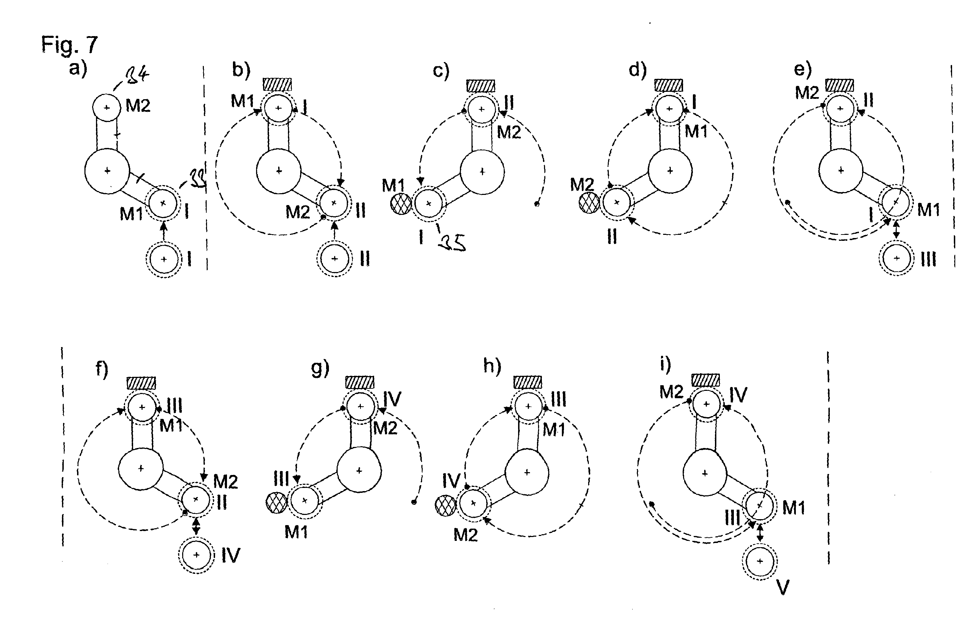

In Figur 7 ist ein dem in Figur 6 gezeigten Verfahrensablauf entsprechendes Verfahren gezeigt, bei welchem die Verschwenkposition jedoch nicht um 180 bzw. 90° auseinander liegen, sondern jeweils um 120° versetzt sind. Dies erfordert eine Verschwenkbarkeit der beiden Maschinentische um jeweils 240°.

Alternativ zu den in Figuren 2 bis 5 gezeigten Ausführungsbeispielen, bei welchen der Gegenhalterarm mit der Motorspindel mitgedreht wird, könnten auch Pick-Up-Spindeln eingesetzt werden, durch welche Werkstücke von einem Band aufgenommen werden können.

Durch die vorliegende Erfindung können die Prozesszeiten erheblich verkürzt werden.

## Patentansprüche

1. Verfahren zur Bearbeitung von Werkstücken zur Herstellung von Verzahnungen durch Verzahnfräsen oder Verzahnstoßen, wobei die Werkstücke an einer Hauptbearbeitungsstation verzahnt und an einer Beladestation be- bzw. entladen und/oder an einer Nebenbearbeitungsstation nebenbearbeitet, insbesondere angefast und/oder entgratet werden, wobei die Werkstücke hierfür an mindestens zwei Werkstückspindeln aufgenommen und jeweils durch Verschwenken der Werkstückspindeln in eine erste und mindestens eine zweite Schwenkposition gefahren werden,
**dadurch gekennzeichnet,**
**dass** die Verschwenkung der beiden Werkstückspindeln unabhängig voneinander erfolgt.

2. Verfahren nach Anspruch 1, wobei die Hauptbearbeitung, die Nebenbearbeitung und das Be- bzw. Entladen an getrennten Stationen erfolgt, wofür die Werkstückspindeln in eine erste, zweite und dritte Schwenkposition gefahren werden.

3. Verfahren nach einem der Ansprüche 1 oder 2, wobei die Bearbeitung an der Nebenbearbeitungsstation jeweils zwischen zwei Verzahnschritten an der Hauptbearbeitungsstation erfolgt und/oder umgekehrt.

4. Verfahren nach einem der vorangegangenen Ansprüche, wobei die beiden Werkstückspindeln zwischen zwei Bearbeitungsschritten jeweils in der gleichen Schwenkrichtung von einer Schwenkposition zur einer anderen Schwenkposition verschwenkt werden und/oder wobei bei einem Verschwenkschritt eine der Werkstückspindeln beim Verschwenken von einer zu einer anderen Schwenkposition um mehr als 180° verschwenkt wird, während die andere um weniger als 180° verschwenkt wird und/oder wobei die Schwenkrichtung bei jedem Verschwenkvorgang wechselt.

5. Verfahren nach einem der vorangegangenen Ansprüche, wobei die Werkstückspindeln Gegenaufnahmen aufweisen, welche mit den Werkstückspindeln mitverschwenkt werden, wobei das Verschenken vorteilhafterweise durch Verschwenken eines verschwenkbaren Maschinentisches erfolgt, an welchem Werkstückspindel und Gegenaufnahme angeordnet sind.

6. Verfahren nach einem der vorangegangenen Ansprüche, wobei die Hauptbearbeitung eines ersten Werkstückes und die Nebenbearbeitung eines zweiten Werkstückes gleichzeitig durchgeführt werden und/oder wobei die Hauptbearbeitung eines ersten Werkstückes und das Be- oder Entladen eines zweiten Werkstückes gleichzeitig durchgeführt werden und/oder wobei die Nebenbearbeitung eines ersten Werkstückes und das Be- oder Entladen eines zweiten Werkstückes gleichzeitig durchgeführt werden.

7. Verfahren nach einem der vorangegangenen Ansprüche, wobei eine der Werkstückspindeln bereits verschwenkt wird, während die andere Werkstückspindel noch in einer festen Verschwenkposition verbleibt, insbesondere während ein an der anderen Werkstücksspindel angeordnetes Werkstück noch haupt- und/oder nebenbearbeitet und/oder be- oder entladen wird.

8. Verfahren nach einem der vorangegangenen Ansprüche, wobei die Nebenbearbeitung durch Anfasfräsentgraten erfolgt, oder wobei die Nebenbearbeitung durch einen ChamferCut-Prozess erfolgt, oder wobei die Nebenbearbeitung durch einen Drückentgrat-Prozess erfolgt.

9. Verfahren nach einem der vorangegangenen Ansprüche, wobei die Schwenkpositionen zumindest teilweise einen Winkel von weniger als 180° zueinander einnehmen und/oder wobei die beiden Werkstückspindel um kolineare Schwenkachsen verschwenkt werden und/oder wobei eine weitere Nebenbearbeitungsstation vorgesehen ist, an welche die Werkstückspindeln in einer dritten oder vierten Schwenkposition herangefahren werden.

10. Fräs- oder Stoßmaschine zur Verzahnbearbeitung von Werkstücken, insbesondere zur Durchführung eines Verfahrens nach einem der vorangegangenen Ansprüche, mit mindestens zwei verschwenkbar angeordneten Werkstückspindeln zur Aufnahme von Werkstücken, mit einer Hauptbearbeitungsstation zum Fräs- oder Stoßbearbeiten der Werkstücke und mit einer Beladestation zum Beladen der Werkstückspindeln und/oder einer Nebenbearbeitungsstation zum Nebenbearbeiten der in den Werkstückspindeln aufgenommenen Werkstücke, wobei die beiden Werkstückspindeln in eine erste und mindestens eine zweite Schwenkposition verschwenkbar an der Maschine angeordnet sind,
**dadurch gekennzeichnet,**
**dass** die beiden Werkstückspindeln unabhängig voneinander verschwenkbar sind.

11. Verzahnmaschine nach Anspruch 10, wobei die Schwenkachsen der beiden Werkstückspindeln kolinear zueinander angeordnet sind.

12. Verzahnmaschine nach Anspruch 10 oder 11, wobei die Beladestation und die Nebenbearbeitungsstation separat ausgeführt sind, wobei die beiden Werkstückspindeln durch Verschwenken in eine erste, zweite und dritte Schwenkposition an die jeweiligen Stationen herangefahren werden.

13. Verzahnmaschine nach einem der vorangegangenen Ansprüche, wobei die Werkstückspindeln Gegenaufnahmen aufweisen, welche mit den Werkstückspindeln mitverschwenkt werden, wobei das Verschenken vorteilhafterweise durch Verschwenken eines Maschinentisches erfolgt, an welchem Werkstückspindel und Gegenaufnahme angeordnet sind.

14. Verzahnmaschine nach einem der vorangegangenen Ansprüche, wobei mindestens eine der Werkstückspindeln um mehr als 180° verschwenkbar ist, insbesondere um mehr als 230°, und/oder wobei die Schwenkpositionen zumindest teilweise einen Winkel von weniger als 180° zueinander einnehmen und/oder wobei eine weitere Nebenbearbeitungsstation vorgesehen ist, an welche die Werkstückspindeln in einer dritten oder vierten Schwenkposition herangefahren werden.

15. Verzahnmaschine mit einer Steuerung, welche Funktionen zur Durchführung eines Verfahren nach einem der Ansprüche 1 bis 10 aufweist, insbesondere Funktionen zur automatischen Durchführung der Verfahren.
